(19) Europäisches Patentamt
European Patent Office
Office européen des brevets

(11) **EP 4 685 652 A1**

(12) **DEMANDE DE BREVET EUROPEEN**

(43) Date de publication:
**28.01.2026 Bulletin 2026/05**

(21) Numéro de dépôt: **24306243.7**

(22) Date de dépôt: **23.07.2024**

(51) Classification Internationale des Brevets (IPC):
**G06F 11/30** (2006.01)    **G06F 11/34** (2006.01)
**G06N 5/04** (2023.01)

(52) Classification Coopérative des Brevets (CPC):
**G06F 11/3096; G06F 11/3409; G06N 5/04;
G06N 20/00**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(71) Demandeur: **BULL SAS**
**78340 Les Clayes-Sous-Bois (FR)**

(72) Inventeurs:
• **HANRIAT, Calliste**
**78340 Les Clayes Sous Bois (FR)**

• **PELISSE-VERDOUX, Cyprien**
**78340 Les Clayes Sous Bois (FR)**
• **RAFFIN, Guillaume**
**78340 Les Clayes Sous Bois (FR)**
• **BOUZON, Lionel**
**78340 Les Clayes Sous Bois (FR)**
• **SEROUL, Pierre**
**78340 Les Clayes Sous Bois (FR)**
• **JOUFFRAY, Titouan**
**78340 Les Clayes Sous Bois (FR)**

(74) Mandataire: **Cabinet Camus Lebkiri**
**25 rue de Maubeuge**
**75009 Paris (FR)**

(54) **PROCÉDÉ DE DÉTERMINATION DE FRÉQUENCE D'ACQUISITION DE DONNÉES POUR LA SURVEILLANCE D'UN CALCULATEUR HAUTES PERFORMANCES**

(57)    Un aspect de l'invention concerne un procédé (1) mis en oeuvre par ordinateur de détermination de fréquences d'acquisition de données de surveillance d'une infrastructure informatique (2), les données acquises étant des caractéristiques matérielles et/ou logicielles de l'infrastructure informatique (2), le procédé (1) comprenant :
- Acquisition (121), à une première fréquence prédéterminée (Fp), d'un ensemble de paramètres prédéterminés, chaque paramètre prédéterminé de l'ensemble de paramètres prédéterminés étant relatif à un état de fonctionnement courant de l'infrastructure informatique (2),
- A chaque acquisition (121) de l'ensemble de paramètres prédéterminés, détermination (122) d'une fréquence d'acquisition (Facq) pour chaque donnée de surveillance parmi les données de surveillance, par un modèle d'apprentissage automatique supervisé entraîné (g) prenant en entrée l'ensemble de paramètres prédéterminés,
- Acquisition (13) de chaque donnée de surveillance à la fréquence d'acquisition déterminée (Facq),
- Stockage (14) des données de surveillance.

$$F_{opt}(M, 0) = g(P_0) \qquad F_{opt}(M, 2) = g(P_2) \qquad g: P \rightarrow F_{opt}$$

**FIG. 4**

EP 4 685 652 A1

## Description

### DOMAINE TECHNIQUE DE L'INVENTION

Le domaine technique de l'invention est celui des calculateurs hautes performances.

La présente invention concerne un procédé de détermination de fréquence d'acquisition de données d'un calculateur hautes performances et en particulier de détermination d'une fréquence optimale pour la surveillance d'un tel calculateur hautes performances.

### ARRIERE-PLAN TECHNOLOGIQUE DE L'INVENTION

L'optimisation de la fréquence d'acquisition de données de surveillance dans les systèmes de calcul haute performance (HPC) est un domaine de recherche essentiel pour améliorer l'efficacité et la performance de ces systèmes. La surveillance des paramètres tels que l'utilisation des ressources de calcul, la mémoire, la température, et d'autres indicateurs de performance est fondamentale pour le bon fonctionnement et la maintenance des infrastructures HPC. Par « surveillance » il est entendu dans la présente demande une surveillance des caractéristiques matérielles (température, consommation électrique, utilisation des ressources de calcul, de mémoire et de réseau) et logicielles (utilisation par processus, par utilisateur, ...) en continu, et non la collecte des évènements (fichiers journaux dits « logs », ...).

Historiquement, diverses méthodes et technologies ont été développées pour la collecte et l'analyse des données de surveillance. Parmi celles-ci, les systèmes de surveillance traditionnels dans les environnements HPC ont souvent été conçus pour recueillir des données à intervalles de temps fixes, indépendamment des conditions de fonctionnement du système. Cette approche, bien que simple à mettre en oeuvre, s'avère inefficace. Par exemple, une fréquence d'acquisition trop élevée peut surcharger le système de calcul en générant un volume de données excessif, entraînant une surcharge des réseaux et des systèmes de stockage. Une surveillance à une fréquence élevée va aussi empêcher le système d'entrer dans des niveaux d'économie d'énergie du fait de la sollicitation imposée au système. À l'inverse, une fréquence d'acquisition trop faible peut manquer des événements critiques ou des variations rapides dans les performances du système. Il existe ainsi un compromis à trouver entre la fréquence de surveillance et l'impact de cette surveillance sur les performances et le stockage.

Pour résoudre ce problème, en maintenant une fréquence d'acquisition fixe, de nombreuses solutions ont porté sur le stockage optimisé des données :

- Les bases de données avec compression : pour contourner les problèmes de stockage lié à une surveillance fine et à haute fréquente, des bases de données proposent des modèles de compressions de données,

- Les bases de données avec politiques de rétention : une autre approche consiste à concaténer (avec perte d'information) les données les plus anciennes,

- D'autres solutions proposent de supprimer à la source des données acquises non pertinentes.

Toutes ces propositions présentent des inconvénients. A l'échelle Exascale, même les algorithmes de compression ne permettent pas de stocker la quantité très importante de données. De plus, sans modification de la fréquence d'acquisition, l'impact de la surveillance reste trop important sur la performance du HPC. La rétention permet de gérer le problème de stockage mais pas celui de l'impact sur la performance des systèmes. De plus, la perte de granularité dans les données n'est pas basée sur l'information contenue dans ces données mais sur l'âge de la donnée.

Pour ne pas avoir à faire appel à ces solutions, diverses recherches ont exploré l'adaptation dynamique de la fréquence d'acquisition des données en fonction de l'état du système. Par exemple, certains travaux ont proposé des algorithmes basés sur des seuils prédéfinis qui ajustent la fréquence de collecte des données lorsqu'un paramètre spécifique dépasse un certain seuil. Cependant, les approches basées sur des seuils peuvent manquer de flexibilité et ne pas réagir de manière optimale aux conditions changeantes du système, par exemple en réagissant après le début de l'évènement. En effet, les systèmes avec variation de fréquence sont réactifs et non-proactifs, engendrant un délai entre la variation de la donnée et celle de la fréquence. De plus, ce délai dépend lui-même de la fréquence d'acquisition. Il est donc variable et potentiellement très grand (lors d'une basse fréquence d'acquisition).

Ainsi, il existe un besoin de développement de méthodes plus efficaces et adaptatives pour l'optimisation de la fréquence d'acquisition des données de surveillance dans les systèmes HPC.

### RESUME DE L'INVENTION

L'invention offre une solution aux problèmes évoqués précédemment, en proposant une solution qui optimise de manière dynamique et intelligente la fréquence de collecte des données, en tenant compte des conditions réelles et des exigences spécifiques de chaque calculateur hautes performances.

Un aspect de l'invention concerne un procédé, mis en oeuvre par ordinateur, de détermination de fréquences d'acquisition de données de surveillance d'une infrastructure informatique, les données acquises étant des caractéristiques matérielles et/ou logicielles de l'infrastructure informatique, le procédé comprenant :

- Acquisition, à une première fréquence prédéterminée, d'un ensemble de paramètres prédéterminés, chaque paramètre prédéterminé de l'ensemble de paramètres prédéterminés étant relatif à un état de fonctionnement courant de l'infrastructure informatique,

- A chaque acquisition de l'ensemble de paramètres prédéterminés, détermination d'une fréquence d'acquisition pour chaque donnée de surveillance parmi les données de surveillance, par un modèle d'apprentissage automatique supervisé entraîné prenant en entrée l'ensemble de paramètres prédéterminés,

- Acquisition de chaque donnée de surveillance à la fréquence d'acquisition déterminée,

- Stockage des données de surveillance.

Grâce à l'invention, il est possible d'obtenir et d'utiliser une fréquence d'acquisition de données de surveillance optimale, c'est-à-dire adaptative et dépendant de paramètres externes prédéterminés de l'infrastructure informatique et non de la survenue d'évènement, permettant une adaptativité de fréquence d'acquisition proactive, au contraire de l'adaptativité réactive en fonction de la survenue d'évènements proposée dans l'état de l'art.

En acquérant un ensemble de paramètres prédéterminés à une fréquence fixe et faible durant l'inférence, l'invention garantit un recueil des données opérationnelles pertinentes sans surcharger l'infrastructure informatique, ayant ainsi un impact de performances faible sur les performances du système.

L'utilisation d'un modèle d'apprentissage automatique supervisé pour déterminer la fréquence optimale d'acquisition des données en fonction des paramètres collectés permet une approche dynamique et adaptative de la surveillance de l'infrastructure informatique. Ce modèle, entraîné sur des données historiques, prédit à chaque acquisition de l'ensemble de paramètres prédéterminés, donc en quasi-temps réel, la fréquence d'acquisition des données de surveillance la plus appropriée, garantissant que la surveillance est à la fois efficace et proactive en fonction de l'état actuel de l'infrastructure informatique. Cette adaptabilité aide à capturer des événements critiques et des variations de performance du système qui pourraient être manqués avec une approche à fréquence fixe, ou avec une approche à fréquence adaptative mais réactive à des événements détectés.

Acquérir des données de surveillance à la fréquence optimale déterminée garantit que le processus de surveillance est ajusté aux besoins du système, réduisant ainsi la collecte et le stockage de données inutiles tout en capturant les métriques de performance essentielles. Cela permet de réaliser par la suite une maintenance de l'infrastructure informatique ou de gérer la consommation d'énergie de l'infrastructure informatique avec une baisse de performances de l'infrastructure informatique moindre que dans l'art antérieur.

Outre les caractéristiques qui viennent d'être évoquées dans les paragraphes précédents, le procédé selon un aspect de l'invention peut présenter une ou plusieurs caractéristiques complémentaires parmi les suivantes, considérées individuellement ou selon toutes les combinaisons techniquement possibles :

- Le procédé comprend en outre préalablement :

  - Acquisition, à la première fréquence fixe prédéterminée, d'un ensemble de paramètres d'entraînement prédéterminés,

  - Stockage de l'ensemble de paramètres d'entraînement prédéterminés acquis,

  - Acquisition à une deuxième fréquence fixe prédéterminée, de données de surveillance d'entraînement, la deuxième fréquence fixe étant égale à une fréquence de surveillance maximale déterminée en inférence et étant supérieure à la première fréquence fixe prédéterminée,

  - Stockage des données de surveillance d'entraînement acquises,

  - entrainement du modèle d'apprentissage automatique supervisé à partir de l'ensemble de paramètres d'entraînement prédéterminés acquis et de l'ensemble de données de surveillance d'entraînement acquises.

- l'entrainement du modèle d'apprentissage automatique supervisé comprend, pour chaque intervalle d'acquisition des paramètres d'entraînement séparant deux acquisitions de l'ensemble de paramètres d'entraînement prédéterminés :

  - Détermination des fréquences d'acquisition de données de surveillance correspondant, pour chaque donnée de surveillance, à une fréquence d'amplitude maximale d'un spectre obtenu par transformée de Fourier d'un signal formé par la donnée de surveillance d'entraînement acquise sur l'intervalle d'acquisition des paramètres d'entraînement. Cela permet d'optimiser la fréquence d'acquisition des données de surveillance en déterminant une fréquence d'amplitude maximale à partir d'un spectre obtenu par transformée de Fourier des données de surveillance d'entraînement. Cette approche garantit que la fréquence d'acquisition est ajustée pour capturer les variations les plus significatives des données, améliorant ainsi la précision et la pertinence des informations collectées. En utilisant l'analyse spectrale, l'invention identifie les composantes fréquentielles dominantes, permettant de détecter des événements critiques et des variations rapides dans les performances de l'infrastructure informatique.

- l'entrainement du modèle d'apprentissage automatique supervisé comprend, pour chaque intervalle d'acquisition des paramètres d'entraînement séparant deux acquisitions de l'ensemble de paramètres d'entraînement prédéterminés et pour chaque donnée de surveillance d'entraînement :

  - Intégration d'amplitudes de fréquences d'un spectre obtenu par transformée de Fourier d'un signal formé par la donnée de surveillance d'entraînement acquise sur l'intervalle d'acquisition des paramètres d'entraînement,

  - Détermination de la fréquence d'acquisition de la donnée de surveillance correspondant à un seuil prédéterminé de l'intégration des amplitudes de fréquence.

- le seuil prédéterminé est compris entre 75% et 99%.

- le modèle d'apprentissage automatique supervisé est configuré pour prédire des fréquences continues, le modèle d'apprentissage automatique supervisé étant un arbre de régression.

- le modèle d'apprentissage automatique supervisé est configuré pour prédire des fréquences discrètes, le modèle d'apprentissage automatique supervisé étant un arbre de classification.

- les données de surveillance comprennent au moins une des données suivantes :

  - l'utilisation d'au moins un noeud de calcul de l'infrastructure informatique,

  - l'utilisation d'au moins un noeud de stockage de l'infrastructure informatique,

  - l'utilisation d'au moins une entrée/sortie de l'infrastructure informatique,

  - la consommation électrique d'au moins une ressource de l'infrastructure informatique,

  - la température d'au moins une ressource de l'infrastructure informatique.

- les paramètres prédéterminés comprennent au moins une des données suivantes :

  - la présence d'un travail de calcul sur un noeud de l'infrastructure informatique,

  - le nombre, le nom ou l'état des processus actifs dans l'infrastructure informatique,

  - un état d'endormissement des noeuds de calcul de l'infrastructure informatique.

Un autre aspect de l'invention concerne un procédé de maintenance d'une infrastructure informatique comprenant le procédé de détermination d'une fréquence d'acquisition de données de surveillance selon l'invention, le procédé de maintenance comprenant une planification d'une maintenance d'une ressource de l'infrastructure informatique en fonction des données de surveillance acquises et stockées.

Encore un autre aspect concerne un procédé d'économie d'énergie d'une infrastructure informatique comprenant le procédé de détermination d'une fréquence d'acquisition de données de surveillance selon l'invention, le procédé d'économie d'énergie comprenant l'émission d'une notification de mise en sommeil d'une ressource de l'infrastructure informatique en fonction des données de surveillance acquises et stockées.

Un autre aspect de l'invention concerne un calculateur hautes performances comprenant un ordinateur configuré pour mettre en oeuvre un procédé selon l'invention.

Un autre aspect de l'invention concerne un produit programme d'ordinateur comprenant des instructions qui, lorsque le programme est exécuté par un ordinateur, conduisent celui-ci à mettre en oeuvre un procédé selon l'invention.

Un autre aspect de l'invention concerne un support de données lisible par ordinateur, sur lequel est enregistré le produit programme d'ordinateur selon l'invention.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1 montre une représentation schématique d'un mode de réalisation d'un procédé selon l'invention.

- La figure 2 montre une représentation schématique d'une infrastructure informatique pour la mise en oeuvre d'un procédé selon l'invention.

- La figure 3 montre une représentation schématique d'une étape d'un mode de réalisation d'un procédé selon l'invention.

- La figure 4 montre une représentation schématique d'un entrainement d'un modèle selon un premier mode de réalisation de l'invention.

- La figure 5 montre une représentation schématique d'un entrainement d'un modèle selon un deuxième mode de réalisation de l'invention.

- La figure 6 montre une représentation schématique d'une étape d'un mode de réalisation d'un procédé selon l'invention.

- La figure 7 montre une représentation schématique d'un système pour la mise en oeuvre d'un procédé selon l'invention.

## DESCRIPTION DETAILLEE

L'invention décrite ci-après permet d'obtenir une fréquence optimale d'acquisition de données de surveillance dans une infrastructure informatique.

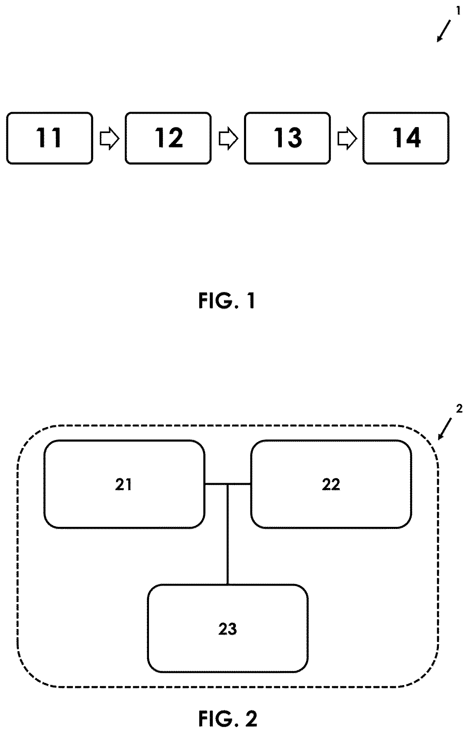

La Figure 1 montre une représentation schématique d'un procédé selon l'invention.

Le procédé 1 selon l'invention est un procédé mis en oeuvre par ordinateur de détermination d'une fréquence d'acquisition de données de surveillance d'une infrastructure informatique.

L'infrastructure informatique est par exemple, préférentiellement, un calculateur hautes performances. Une telle infrastructure informatique est représentée schématiquement à la Figure 2.

L'infrastructure informatique 2 représentée à la Figure 2 comprend au moins un noeud de calcul 21, un noeud de stockage 22 et un module de surveillance 23. Le module de surveillance 23 est par exemple un module logiciel ou un dispositif physique configuré pour exécuter un module logiciel. Le module de surveillance 23 réalise des actions de surveillance de l'infrastructure informatique 2, actions aussi appelées « monitoring » en anglais.

Le procédé 1 selon l'invention est donc mis en oeuvre par le module de surveillance 23, par exemple car le module de surveillance 23 est un ordinateur. Le module de surveillance 23 peut alors être compris dans l'infrastructure informatique 2, ou être un élément extérieur à l'infrastructure informatique 2. Dans ce deuxième cas, il est par exemple connecté à l'infrastructure informatique 2 via un réseau.

On dit d'un procédé qu'il est « mis en oeuvre par ordinateur » lorsque le procédé est stocké dans une mémoire de l'ordinateur sous forme d'instructions qui, lorsque celles-ci sont exécutées par un processeur de l'ordinateur, conduisent le processeur et donc l'ordinateur à mettre en oeuvre le procédé.

Le module de surveillance 23 est configuré pour surveiller l'infrastructure informatique 2. Pour cela, il met en oeuvre le procédé 1 selon l'invention.

Le procédé 1 selon l'invention comprend une première étape 11 d'entraînement d'un modèle d'apprentissage automatique supervisé.

Le modèle d'apprentissage automatique supervisé entraîné est par exemple de type arbre de régression multi sorties, ou arbre de classification multi sorties, en fonction du format de la sortie souhaitée (respectivement fréquence continue ou fréquence discrète). L'invention n'est bien entendu pas limitée à ces types de modèles d'apprentissage automatique et tout modèle d'apprentissage automatique supervisé convenable pourrait être utilisé.

Par la suite, lorsqu'un élément est dit « prédéterminé », on entend qu'il a été défini antérieurement à son utilisation, par exemple en étant accessible dans un fichier de configuration, la prédétermination ayant été par exemple réalisée manuellement par un opérateur ou automatiquement par un logiciel.

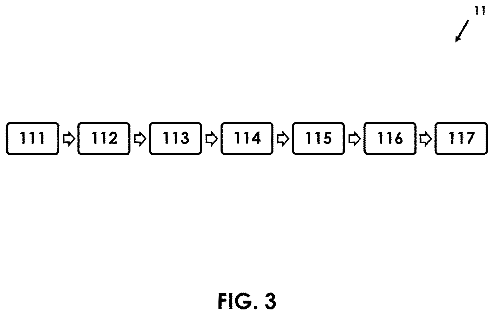

Cette première étape 11 est représentée schématiquement à la Figure 3, qui montre une pluralité de sous-étapes.

Les étapes d'acquisition de données comprennent au moins la réception de la donnée par l'ordinateur mettant en oeuvre l'invention, par exemple via un réseau informatique, de manière filaire ou sans fil. Une acquisition est préférentiellement active, c'est-à-dire à l'initiative de l'ordinateur mettant en oeuvre le procédé 1, par exemple réalisée à une fréquence prédéterminée auprès d'une ressource prédéterminée.

Une sous-étape 111 de l'étape 11 comprend une acquisition, à une première fréquence fixe prédéterminée, de valeurs d'un ensemble de paramètres d'entraînement prédéterminés. L'ensemble de paramètres prédéterminés acquis à l'entraînement, comme à l'inférence, est un ensemble de paramètres externes de l'infrastructure informatique 2. Un paramètre externe de l'infrastructure informatique 2 est une variable ou un indicateur qui n'est pas directement lié aux caractéristiques internes du système, mais qui influence ou reflète l'état de fonctionnement global de l'infrastructure informatique 2. En cela, il est relatif à un état de fonctionnement courant de l'infrastructure informatique 2. Ces paramètres externes peuvent comprendre, sans s'y limiter, au moins un des paramètres suivants : la présence d'un travail de calcul sur un noeud, le nombre de processus actifs dans l'infrastructure informatique 2, leur nom et leur état, l'état d'endormissement des noeuds de calcul, et/ou tout autre paramètre externe pertinent pour le calcul de la fréquence de surveillance. Les noms des processus sont par exemple encodés sous forme vectorielle. Ces paramètres externes sont essentiels pour définir un contexte de la surveillance à mener et permettent d'ajuster dynamiquement la fréquence d'acquisition des données de surveillance en fonction des besoins opérationnels et des conditions de fonctionnement du système.

La première fréquence fixe prédéterminée est appelée Fp et est préférentiellement comprise entre 0,1 Hz et 1 Hz. Cette fréquence d'acquisition de paramètres prédéterminés à l'entraînement est identique à la fréquence d'acquisition des paramètres prédéterminés lors de l'inférence. La première fréquence d'acquisition Fp définit un intervalle dont la période est $T_P = \frac{1}{F_P}$. Avec la fourchette de fréquence Fp [0,1Hz ;1Hz], l'intervalle a une durée temporelle comprise entre 1 seconde et 10 secondes.

Dans une sous-étape 112, l'ensemble de valeurs de paramètres d'entraînement prédéterminés acquis à la sous-étape 111 est stocké, par exemple dans une mémoire de l'ordinateur mettant en oeuvre le procédé 1, ou dans un noeud de stockage de l'infrastructure informatique 2, ou dans un moyen de stockage compris dans ou externe à l'infrastructure informatique 2.

Ensuite, ou en parallèle des sous-étapes 111 et 112, une sous-étape 113 de l'étape 11 comprend une acquisition, à une deuxième fréquence fixe Fmax prédéterminée, de valeurs de données de surveillance d'entraînement. Les données de surveillance acquises à l'entraînement, comme à l'inférence, sont prédéterminées et sont des caractéristiques internes de l'infrastructure informatique 2 qui sont surveillées pour évaluer et optimiser les performances et l'efficacité de l'infrastructure informatique 2. Ces métriques incluent, sans s'y limiter, l'utilisation des ressources telles que les noeuds de calcul, les noeuds graphiques, les noeuds de stockage, et les entrées/sorties (IO), la consommation électrique, la température de l'infrastructure informatique 2, et tout autre paramètre technique spécifique à l'infrastructure informatique 2 permettant de rendre compte de son état de fonctionnement à un instant d'acquisition. Les métriques fournissent des informations détaillées sur l'état de fonctionnement de l'infrastructure informatique 2 et sont utilisées pour identifier les goulots d'étranglement, optimiser l'utilisation des ressources, et prévenir les défaillances potentielles. En surveillant ces métriques, il est possible de prendre des décisions éclairées pour améliorer la performance globale et l'efficacité énergétique de l'infrastructure informatique 2.

La deuxième fréquence fixe prédéterminée Fmax est égale à la fréquence de surveillance maximale déterminable en inférence. De plus, la fréquence fixe Fmax est supérieure à la première fréquence fixe prédéterminée, de sorte que Fmax > Fp. Par exemple, Fmax peut être comprise entre 100 Hz et 10 kHz.

Après la sous-étapes 113, et optionnellement en parallèle des sous-étapes 111 et 112, dans une sous-étape 114, l'ensemble de valeurs de données de surveillance d'entraînement prédéterminées acquis à la sous-étape 113 est stocké, par exemple dans une mémoire de l'ordinateur mettant en oeuvre le procédé 1, ou dans un noeud de stockage de l'infrastructure informatique 2, ou dans un moyen de stockage compris dans ou externe à l'infrastructure informatique 2.

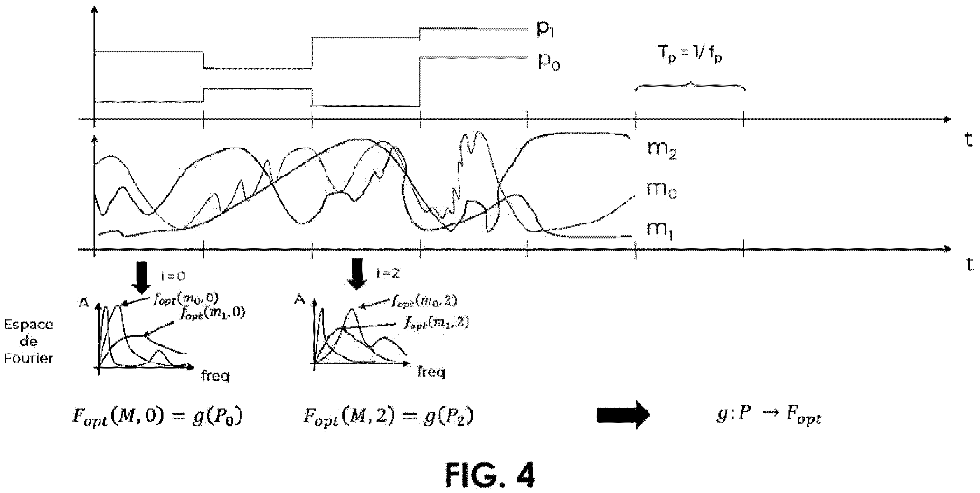

Dans le procédé 1 selon l'invention, une sous-étape 115 de l'étape 11 comprend ensuite un calcul d'une transformée de Fourier du signal temporel formé par les données de surveillance acquises et stockées aux sous-étapes 113 et 114. La transformée de Fourier est calculée pour chaque donnée de surveillance différente, et sur chaque intervalle d'acquisition de paramètres prédéterminés. Ainsi, si la fréquence fixe Fp d'acquisition des paramètres prédéterminés est de 1 Hz, chaque intervalle aura une durée de 1 seconde. L'invention comprend donc le calcul de la transformée de Fourier associée à une unique valeur pour chaque paramètre prédéterminé, puisque la transformée de Fourier des données de surveillance est calculée sur le pas d'échantillonnage choisi des paramètres prédéterminés. Cela est représenté schématiquement à la Figure 4, qui montre deux paramètres prédéterminés p0 et p1, dont les valeurs sont acquises à la première fréquence fixe prédéterminée Fp. Chacun des paramètres p0 et p1 a donc une valeur unique sur chaque intervalle de durée $T_P = \frac{1}{F_P}$. Sur chaque intervalle, la transformée de Fourier de chaque signal temporel m0, m1 et m2 formé par les données de surveillance acquises et stockées est calculée, comme représenté sur la partie basse de la Figure 4. La transformée de Fourier peut par exemple être calculée en utilisant une fonction de transformation de Fourier rapide, aussi appelée FFT de l'anglais « Fast Fourier Transform » car le signal numérique formé par les données de surveillance est un signal discret.

Une fréquence d'acquisition des données de surveillance à utiliser à l'inférence est ensuite sélectionnée dans une sous-étape 116, pour chaque donnée de surveillance, à partir du spectre de la donnée de surveillance d'entraînement issu de la transformée de Fourier.

Cette sélection 116 peut être réalisée de deux façons, et donc selon deux modes de réalisation. Dans un premier mode de réalisation, la fréquence d'acquisition des données de surveillance sélectionnée à la sousétape 116 pour entraîner le modèle est la fréquence d'amplitude maximale du spectre obtenu par transformée de Fourier. Autrement dit, pour chaque donnée de surveillance m E M dans un intervalle, la fréquence optimale d'acquisition est calculée comme étant la fréquence d'amplitude maximale dans l'espace de Fourier, M étant l'ensemble des données de surveillance acquis et stocké aux sous-étapes 113 et 114.

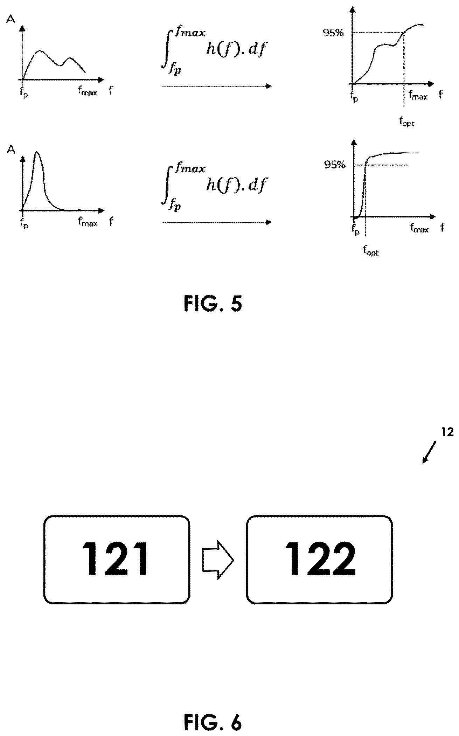

Dans un deuxième mode de réalisation de la sous-étape 116, pour sélectionner la fréquence d'acquisition, est tout d'abord calculée une intégrale sur la fréquence, entre les bornes Fp et Fmax, du spectre du signal formé par les données de surveillance d'entraînement obtenu par transformée de Fourier. La fréquence d'acquisition sélectionnée est alors la fréquence correspondant à un seuil prédéterminé de l'intégration. Par exemple, comme représenté schématiquement à la Figure 5, dans les deux exemples la fréquence fopt sélectionnée est la fréquence correspondant à un seuil de 95% de l'intégrale. Avec cette méthode, 95% de l'énergie totale du signal est capturée, alors que la fréquence optimisée est souvent bien inférieure à la fréquence maximale. Cela permet d'éliminer les fréquences qui contribuent le moins au signal. Préférentiellement, le seuil choisi est compris entre 75% et 99%.

A une sous-étape 117, le modèle d'apprentissage automatique sélectionné est entraîné avec, sur tous les intervalles Tp, l'ensemble de valeurs de paramètres prédéterminés d'entraînement acquis et stocké aux sous-étape 111 et 112 associé à l'ensemble de fréquences d'acquisition de données de surveillance sélectionnées à la sous-étape 116 pour chaque donnée de surveillance. On obtient alors une fonction g associant, sur chaque intervalle d'acquisition des paramètres prédéterminés, un ensemble de fréquences d'acquisition de données de surveillance Fopt à un ensemble de valeurs de paramètres prédéterminés P.

Une fois l'entraînement du modèle g réalisé, le procédé 1 selon l'invention comprend au moins une étape 12 d'inférence. Cette étape 12 est représentée schématiquement à la Figure 6.

L'inférence est le processus durant lequel le modèle d'apprentissage automatique entraîné est utilisé pour obtenir une nouvelle donnée à partir de données du même type que les données d'entraînement. Dans l'invention, le modèle g entraîné est utilisé pour obtenir une fréquence d'acquisition de données de surveillance à partir de paramètres prédéterminés acquis.

Ainsi, l'étape 12 comprend une première sous-étape 121 d'acquisition, à la première fréquence prédéterminée Fp, d'un ensemble de paramètres prédéterminés.

Un nouvel ensemble de paramètres prédéterminés est acquis tous les $T_P = \frac{1}{F_P}$. A chaque instant d'acquisition, une nouvelle valeur pour chaque paramètre prédéterminé de l'ensemble de paramètres prédéterminés est acquise. L'ensemble de paramètres prédéterminés acquis durant l'inférence 12 est identique à l'ensemble de paramètres prédéterminés d'entraînement de l'étape 11, c'est-à-dire que chaque paramètre acquis est le même paramètre que le paramètre acquis à l'entraînement 11, seule sa valeur peut différer. Par « valeur » on entend une mesure numérique ou qualitative spécifique que peut prendre un paramètre. Un paramètre est une variable ou une caractéristique mesurable qui est utilisée pour décrire un aspect spécifique de l'infrastructure informatique 2. Ainsi, la "valeur" d'un paramètre est la donnée particulière qu'il prend dans un contexte donné.

Au contraire de l'entraînement 11, l'ensemble de paramètres prédéterminés acquis à l'étape 12 d'inférence n'est pas stocké. En effet, le stockage n'est pas nécessaire car le modèle g est déjà entraîné et les données peuvent être fournies en entrée du modèle g sans avoir été stockées préalablement. Cela permet notamment de réduire l'impact du procédé 1 sur les performances de l'infrastructure informatique 2.

L'étape 12 comprend une deuxième sous-étape 122 détermination de fréquences d'acquisition des données de surveillance à chaque acquisition de l'ensemble de paramètres prédéterminés de la sous-étape 121. Cette détermination est donc réalisée tous les $T_P = \frac{1}{F_P}$. au moins en partie par le modèle d'apprentissage automatique supervisé entraîné g, prenant en entrée l'ensemble de paramètres prédéterminés acquis à la sous-étape 121 et estime en sortie une fréquence d'acquisition Facq_est des données de surveillance, grâce à son entraînement. Une fréquence d'acquisition est estimée pour chaque donnée de surveillance de l'ensemble de données de surveillance à acquérir, et chaque fréquence d'acquisition peut donc être différente des autres (ou peut être identique). Un ensemble de fréquences d'acquisition est donc obtenu.

Pour chaque donnée de surveillance, le fréquence d'acquisition des données de surveillance réellement utilisée Facq, c'est-à-dire celle qui sera considérée comme « déterminée » à l'issue de la sous-étape 121, est calculée comme étant au moins deux fois la fréquence estimée Facq_est par le modèle g, afin de limiter la perte d'information en respectant le critère de Shannon. Préférentiellement, la fréquence d'acquisition finale est égale à deux fois la fréquence d'acquisition estimée par le modèle g entraîné : $F_{acq} = 2 * F_{acq\_est}$.

Comme la détermination des fréquences d'acquisition Facq à la sous-étape 122 est réalisée à chaque acquisition d'ensemble de paramètres prédéterminés, c'est-à-dire tous les Tp, et comme la première fréquence fixe Fp est faible (par exemple entre 0,1 et 1 Hz), il est important que le modèle g choisi soit capable d'estimer une fréquence d'acquisition sur cet intervalle de temps Tp, et donc que le modèle demande des ressources de calcul limitées. C'est pourquoi il sera préféré des modèles de type arbre de décision à des modèles plus lourds comme des réseau de neurone. Tout type de modèle g peut être utilisé dans l'invention, tant qu'il est capable d'estimer une fréquence d'acquisition à partir de l'ensemble de paramètre prédéterminés dans un intervalle de temps Tp.

Après avoir déterminé les fréquences d'acquisition des données de surveillance Facq, le procédé 1 selon l'invention comprend une étape 13 d'acquisition des données de surveillance à chaque fréquence d'acquisition Facq déterminée à l'étape 11. Chaque donnée de surveillance de l'ensemble de données de surveillance est acquise à la fréquence d'acquisition déterminée qui lui est associée. Les données de surveillance acquises sont les mêmes données de surveillance qu'à l'entrainement 11, seule leur valeur peut différer. Par « valeur » on entend une mesure numérique ou qualitative spécifique que peut prendre une donnée de surveillance. Une donnée de surveillance est une variable ou une caractéristique mesurable qui est utilisée pour représenter le fonctionnement d'une ressource de l'infrastructure informatique 2. Ainsi, la "valeur" d'une donnée de surveillance est la donnée particulière qu'il prend dans un contexte donné. Les données de surveillance acquises à l'étape 13 peuvent être acquises de la même manière qu'à l'entraînement, ou différemment, par exemple directement auprès des ressources de l'infrastructure informatique 2 surveillées alors qu'à l'entraînement elles étaient par exemple acquises auprès d'une base de données d'entraînement. L'invention permet donc d'avoir une fréquence d'acquisition variable qui soit proactive (et non réactive, après la survenue d'évènements) et sui soit adaptée au contexte de l'infrastructure informatique 2 grâce à la prise en compte de paramètres prédéterminés reflétant l'état de fonctionnement de l'infrastructure informatique 2.

Les données de surveillance acquises à l'étape 13 sont ensuite stockées lors d'une étape 14. Ce stockage peut être réalisé de toute manière connue de l'homme du métier, par exemple dans une base de données de surveillance, comprise ou non dans l'infrastructure informatique 2.

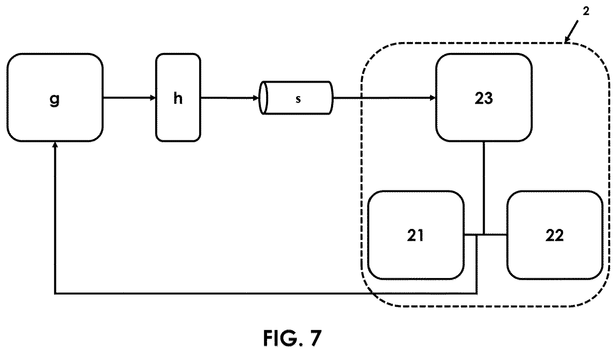

La Figure 7 montre une représentation schématique d'un système permettant l'utilisation des données de surveillance acquises et stockées grâce au procédé 1 selon l'invention.

Dans ce système, la sortie du modèle g entraîné est envoyée au module de surveillance 23. Ainsi, le module de surveillance 23 peut réaliser les actions d'acquisition et de stockage des données de surveillance aux fréquences déterminées par le modèle g ou aux fréquences déterminées à partir de l'estimation réalisée par le modèle g. Pour cela, il est possible d'utiliser une connecteur s, par exemple de type « socket », par exemple selon la suite de protocoles Internet IP (pour « Internet Protocol » en anglais).

Le système de la Figure 7 comprend en outre un module optionnel d'hystérésis h, qui permet d'éviter les changements permanents de fréquence. Le module optionnel d'hystérésis h compare la fréquence d'acquisition déterminée à un seuil prédéfini, par exemple un seuil dit « A ». Tant que la fréquence d'acquisition déterminée est inférieure au seuil A, la fréquence d'acquisition effectivement utilisée est la fréquence d'acquisition courante, c'est-à-dire la fréquence d'acquisition déjà utilisée directement précédemment pour acquérir les données de surveillance. Si la fréquence d'acquisition déterminée est supérieure au seuil A, alors la fréquence courante est augmentée en devenant la fréquence d'acquisition déterminée. De même, un seuil prédéfini « B » peut être utilisé, pour ne diminuer la fréquence d'acquisition que si la fréquence d'acquisition déterminée ne passe sous ce seuil B. Le deuxième seuil B permet d'éviter des changements excessifs de fréquence si la fréquence d'acquisition déterminée oscille autour du premier seuil A.

Le module de surveillance 23 réalise alors l'acquisition des données de surveillance aux fréquences d'acquisition déterminées, et peut ensuite être configuré pour mettre en oeuvre des actions liées à ces données de surveillance acquises et stockées.

Par exemple, le module de surveillance 23 ou un autre module de l'infrastructure informatique 2, peut être configuré pour mettre en oeuvre un procédé de maintenance de l'infrastructure informatique 2 comprenant, à partir des données de surveillance acquises aux fréquences d'acquisition déterminées par le procédé selon l'invention et stockées, la mise en oeuvre d'une planification d'une maintenance d'une ressource de l'infrastructure informatique 2. Cela peut être mis en oeuvre par l'utilisation d'un autre modèle d'apprentissage automatique configuré pour détecter, à partir des données de surveillance, la survenance d'une panne d'une ressource de l'infrastructure informatique, et/ou par exemple pour réaliser de la maintenance prédictive.

Alternativement ou cumulativement, par exemple, le module de surveillance 23 ou un autre module de l'infrastructure informatique 2, peut être configuré pour mettre en oeuvre un procédé d'économie d'énergie de l'infrastructure informatique 2, le procédé d'économie d'énergie comprenant l'émission d'une notification de mise en sommeil d'une ressource de l'infrastructure informatique en fonction des données de surveillance acquises et stockées, la notification étant à destination de la ressource à mettre en sommeil. De nombreux procédés d'économie d'énergie sont connus de l'homme du métier et peuvent être utilisés dans l'invention, à partir des données de surveillance acquises aux fréquences d'acquisition déterminées par le procédé selon l'invention.

**Revendications**

1. Procédé (1) mis en oeuvre par ordinateur de détermination de fréquences d'acquisition de données de surveillance d'une infrastructure informatique (2), les données acquises étant des caractéristiques matérielles et/ou logicielles de l'infrastructure informatique (2), le procédé (1) comprenant :

   - Acquisition (121), à une première fréquence prédéterminée (Fp), d'un ensemble de paramètres prédéterminés, chaque paramètre prédéterminé de l'ensemble de paramètres prédéterminés étant relatif à un état de fonctionnement courant de l'infrastructure informatique (2),
   - A chaque acquisition (121) de l'ensemble de paramètres prédéterminés, détermination (122) d'une fréquence d'acquisition (Facq) pour chaque donnée de surveillance parmi les données de surveillance, par un modèle d'apprentissage automatique supervisé entraîné (g) prenant en entrée l'ensemble de paramètres prédéterminés,
   - Acquisition (13) de chaque donnée de surveillance à la fréquence d'acquisition déterminée (Facq),
   - Stockage (14) des données de surveillance.

2. Procédé (1) selon la revendication 1 comprenant en outre préalablement :

- Acquisition (111), à la première fréquence fixe prédéterminée (Fp), d'un ensemble de paramètres d'entraînement prédéterminés,
- Stockage (112) de l'ensemble de paramètres d'entraînement prédéterminés acquis (111),
- Acquisition (113) à une deuxième fréquence fixe prédéterminée (Fmax), de données de surveillance d'entraînement, la deuxième fréquence fixe étant égale à une fréquence de surveillance maximale (Fmax) déterminée en inférence et étant supérieure à la première fréquence fixe prédéterminée (Fp),
- Stockage (114) des données de surveillance d'entraînement acquises (113),
- entrainement du modèle d'apprentissage automatique supervisé (g) à partir de l'ensemble de paramètres d'entraînement prédéterminés acquis (111) et de l'ensemble de données de surveillance d'entraînement acquises (113).

3. Procédé (1) selon la revendication 2 selon lequel l'entrainement du modèle d'apprentissage automatique supervisé (g) comprend, pour chaque intervalle d'acquisition des paramètres d'entraînement séparant deux acquisitions de l'ensemble de paramètres d'entraînement prédéterminés :

   - Détermination (116) des fréquences d'acquisition de données de surveillance correspondant, pour chaque donnée de surveillance, à une fréquence d'amplitude maximale d'un spectre obtenu par transformée de Fourier (115) d'un signal formé par la donnée de surveillance d'entraînement acquise sur l'intervalle d'acquisition des paramètres d'entraînement.

4. Procédé selon la revendication 2 selon lequel l'entrainement du modèle d'apprentissage automatique supervisé (g) comprend, pour chaque intervalle d'acquisition des paramètres d'entraînement séparant deux acquisitions de l'ensemble de paramètres d'entraînement prédéterminés et pour chaque donnée de surveillance d'entraînement :

   - Intégration d'amplitudes de fréquences d'un spectre obtenu par transformée de Fourier (115) d'un signal formé par la donnée de surveillance d'entraînement acquise sur l'intervalle d'acquisition des paramètres d'entraînement,
   - Détermination (116) de la fréquence d'acquisition de la donnée de surveillance correspondant à un seuil prédéterminé de l'intégration des amplitudes de fréquence.

5. Procédé (1) selon la revendication 4 selon lequel le seuil prédéterminé est compris entre 75% et 99%.

6. Procédé (1) selon l'une des revendications précédentes selon lequel le modèle d'apprentissage automatique supervisé (g) est configuré pour prédire des fréquences continues, le modèle d'apprentissage automatique supervisé (g) étant un arbre de régression.

7. Procédé selon l'une des revendications 1 à 5 selon lequel le modèle d'apprentissage automatique supervisé (g) est configuré pour prédire des fréquences discrètes, le modèle d'apprentissage automatique supervisé (g) étant un arbre de classification.

8. Procédé (1) selon l'une des revendications précédentes selon lequel les données de surveillance comprennent au moins une des données suivantes :

   - l'utilisation d'au moins un noeud de calcul de l'infrastructure informatique (2),
   - l'utilisation d'au moins un noeud de stockage de l'infrastructure informatique (2),
   - l'utilisation d'au moins une entrée/sortie de l'infrastructure informatique (2),
   - la consommation électrique d'au moins une ressource de l'infrastructure informatique (2),
   - la température d'au moins une ressource de l'infrastructure informatique (2).

9. Procédé (1) selon l'une des revendications précédentes selon lequel les paramètres prédéterminés comprennent au moins une des données suivantes :

   - la présence d'un travail de calcul sur un noeud de l'infrastructure informatique (2),
   - le nombre, le nom ou l'état des processus actifs dans l'infrastructure informatique (2),
   - un état d'endormissement des noeuds de calcul de l'infrastructure informatique (2).

10. Procédé de maintenance d'une infrastructure informatique (2) comprenant le procédé (1) de détermination d'une fréquence d'acquisition de données de surveillance selon l'une des revendications précédentes, le procédé de maintenance comprenant une planification d'une maintenance d'une ressource de l'infrastructure informatique (2) en fonction des données de surveillance acquises et stockées.

11. Procédé d'économie d'énergie d'une infrastructure informatique comprenant le procédé (1) de détermination d'une fréquence d'acquisition de données de surveillance selon l'une des revendications précédentes, le procédé d'économie d'énergie comprenant l'émission d'une notification de mise en sommeil d'une ressource de l'infrastructure informatique (2) en fonction des données de surveillance acquises et stockées.

12. Calculateur hautes performances comprenant un ordinateur configuré pour mettre en oeuvre un procédé (1) selon l'une des revendications précédentes.

13. Produit programme d'ordinateur comprenant des instructions qui, lorsque le programme est exécuté par un ordinateur, conduisent celui-ci à mettre en oeuvre un procédé selon l'une des revendications 1 à 11.

14. Support de données lisible par ordinateur, sur lequel est enregistré le produit programme d'ordinateur selon la revendication 13.

**FIG. 1**

**FIG. 2**

11

111 ⇨ 112 ⇨ 113 ⇨ 114 ⇨ 115 ⇨ 116 ⇨ 117

FIG. 3

FIG. 4

$$\int_{f_p}^{f_{max}} h(f).df$$

$$\int_{f_p}^{f_{max}} h(f).df$$

FIG. 5

FIG. 6

FIG. 7

Europäisches
Patentamt

European
Patent Office

Office européen
des brevets

**RAPPORT DE RECHERCHE EUROPEENNE**

Numéro de la demande

EP 24 30 6243

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 4 050 487 A1 (SIEMENS AG [DE]) 31 août 2022 (2022-08-31) | 1,8-14 | INV. G06F11/30 |
| A | * abrégé * * alinéas [0007] - [0012], [0033], [0034], [0043] - [0048], [0053] - [0067], [0073] * | 2-7 | G06F11/34 G06N5/04 |
| | ----- | | |
| A | EP 4 261 751 A1 (JUNIPER NETWORKS INC [US]) 18 octobre 2023 (2023-10-18) * abrégé * * alinéas [0080], [0107], [0115] - [0121] * | 1-14 | |
| | ----- | | |

**DOMAINES TECHNIQUES RECHERCHES (IPC)**

G06F
G06N

Le présent rapport a été établi pour toutes les revendications

| Lieu de la recherche | Date d'achèvement de la recherche | Examinateur |
|---|---|---|
| Munich | 25 avril 2025 | Leuridan, Koen |

**ANNEXE AU RAPPORT DE RECHERCHE EUROPEENNE
RELATIF A LA DEMANDE DE BREVET EUROPEEN NO.**

EP 24 30 6243

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-04-2025

| Document brevet cité au rapport de recherche | | Date de publication | Membre(s) de la famille de brevet(s) | | Date de publication |
|---|---|---|---|---|---|
| EP 4050487 | A1 | 31-08-2022 | CN | 114600089 A | 07-06-2022 |
| | | | EP | 4050487 A1 | 31-08-2022 |
| | | | US | 2023004475 A1 | 05-01-2023 |
| | | | WO | 2021102838 A1 | 03-06-2021 |
| EP 4261751 | A1 | 18-10-2023 | EP | 4261751 A1 | 18-10-2023 |
| | | | US | 2024211368 A1 | 27-06-2024 |

EPO FORM P0460

Pour tout renseignement concernant cette annexe : voir Journal Officiel de l'Office européen des brevets, No.12/82